(19) Europäisches Patentamt
European Patent Office
Office européen des brevets

(11) **EP 3 958 025 B1**

(12) **EUROPÄISCHE PATENTSCHRIFT**

(45) Veröffentlichungstag und Bekanntmachung des Hinweises auf die Patenterteilung:
**19.02.2025   Patentblatt 2025/08**

(21) Anmeldenummer: **21000227.5**

(22) Anmeldetag: **11.08.2021**

(51) Internationale Patentklassifikation (IPC):
**B42D 25/324** (2014.01)   **B42D 25/425** (2014.01)
**G07D 7/00** (2016.01)   **G07D 7/005** (2016.01)
**G02B 5/124** (2006.01)   **G02B 5/18** (2006.01)
**B42D 25/328** (2014.01)

(52) Gemeinsame Patentklassifikation (CPC):
**G02B 5/124; B42D 25/324; B42D 25/328; B42D 25/425; G02B 5/1861; G07D 7/003; G07D 7/005**

(54) **RETROREFLEKTIERENDES ELEMENT MIT EINEM SICHERHEITSELEMENT**

RETROREFLECTING ELEMENT WITH SECURITY ELEMENT

ÉLÉMENT RÉTRO-RÉFLÉCHISSANT DOTÉ D'UN ÉLÉMENT DE SÉCURITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.08.2020   DE 102020004967**

(43) Veröffentlichungstag der Anmeldung:
**23.02.2022   Patentblatt 2022/08**

(60) Teilanmeldung:
**22000025.1 / 4 016 143**

(73) Patentinhaber: **Gubela, Hans-Erich**
**77876 Kappelrodek (DE)**

(72) Erfinder: **Gubela, Hans-Erich**
**77876 Kappelrodek (DE)**

(74) Vertreter: **Jooß, Achim**
**IMOS Gubela GmbH**
**Kniebisstraße 1**
**77871 Renchen (DE)**

(56) Entgegenhaltungen:
**EP-A1- 3 598 186**        **WO-A1-2020/074746**
**DE-A1- 102005 061 749**

**Beschreibung**

Durch die immer weiter fortschreitende Miniaturisierung im Bereich der Retroreflektoren insbesondere in den Bereichen Displays und Folien und die daraus resultierende schwierigere Fertigung der miniaturisierten Strukturen, insbesondere von Full-Cube-Strukturen, besteht der Wunsch, diese Strukturen vor Nachahmung zu schützen. Gleichzeitig besteht der Wunsch, dass durch eine Markierung zum Nachahmungsschutz möglichst wenig Reflektionsleistung verloren geht.

Unter dem Begriff "Retroreflektor" werden optische Elemente verstanden werden, die in einem bestimmten Winkelbereich einfallendes Licht unabhängig vom exakten Einfallswinkel wieder zum großen Teil zurück zur Lichtquelle zurücklenken. Gewisse Abweichungen des zurückreflektierten Strahles von der Einfallsrichtung sind dabei möglich und teilweise sogar erwünscht, wenn zum Beispiel Lichtquelle und intendierter Rezipient der reflektierten Strahlung nicht in einer exakten Flucht vom Reflektor aus betrachtet sind.

Sehr häufig sind Anwendungen, bei denen der Retroreflektor aus einer Anordnung mehrerer Tripel mit jeweils im Wesentlichen senkrecht aufeinander stehenden reflektierenden Seitenflächen besteht, von denen jede Seitenfläche eine Komponente des Richtungsvektors umdreht. In vielen Anwendungen bestehen die Tripel aus Tetraederstrukturen (zum Beispiel US3810804 A Anmelder: Rowland dev. Corp), d.h. aus halben Würfeln, die entlang einer Diagonalen abgeschnitten sind. Solche Pyramidenstrukturen haben den Nachteil, dass sie aufgrund von Totflächen, d.h. Flächen, deren reflektierte Strahlen nicht weiter reflektiert werden können, einen maximalen Wirkungsgrad von nur ca. 66 % haben.

Sehr häufig sind auch Anordnungen, bei der die drei Seitenflächen eines Tripels im Wesentlichen quadratisch und von gleicher Größe sind. Sie bilden dann eine Ecke (also drei in einem Punkt zusammenstoßende Flächen) eines Würfels. In der Projektion auf eine Lichteintrittsfläche ergibt sich bei dieser Struktur ein regelmäßiges Sechseck. Ein solcher spezieller Tripel soll hier als Full-Cube bezeichnet werden. Im Folgenden wird von Full-Cube-Strukturen ausgegangen. Die Erfindung kann ohne Beschränkung der Allgemeinheit aber auch bei Retroreflektoren mit Pyramidenstrukturen oder bei Retroreflektoren, bei denen die Projektion auf die Lichteintrittsfläche ein Rechteck ergibt, wie z.B. in der DE 4 236 779 A1 (Anmelder: Hans- Erich Gubela sen.) beschrieben, sowie bei allen anderen Tripelstrukturen mit drei nahezu senkrecht stehenden Seitenflächen angewendet werden.

Von der IMOS Gubela GmbH ist seit langem ein mit einem Hologramm in einer Ecke gekennzeichneter Retroreflektor auf dem Markt erhältlich. Hierbei ist das Hologramm jedoch sofort sichtbar, wenn der Retroreflektor unter kleinem Anleuchtwinkel beleuchtet wird. Auch die Strukturen, die in der DE 10 2018 112 043 A1 (Anmelderin: Imos Gubela GmbH offenbart werden, zeigen das Problem, dass sie sofort sichtbar sind, wenn sie unter kleinem Anleuchtwinkel offenbart werden.

In der DE 103 12 708 B4 (Inhaberin: OVD Kinegram AG Anmeldetag: 21.3.2003) ist ein Retroreflektor aus einem Kunststoffschichtverbund mit einer reliefartigen Mattstruktur offenbart, die eine Polarisationsrichtung des reflektierten Lichts verändert jedoch keine Beugungseffekte für sichtbares Licht zeigt.

In der wissenschaftlichen Literatur ("Color-selective holographic retroreflector array for sensing applications" Autoren: Rajib Ahmed, Ali K Yetisen, Seok Hyun Yun und Haider Butt veröffentlicht in Light: Science & Applications (2017) 6 preview online 5 September 2016) wird ein holographisches Abbild eines Würfeleckenreflektors diskutiert, das die gleichen Phaseneigenschaften wie ein normaler Würfeleckenreflektor aufweist, allerdings selbst keine retroreflektierenden Eigenschaften hat. In den Druckschriften DE 10 2012 105 571 A1 (Anmelderin: OVD Kinegram AG) und DE 10 2009 012 300 A1 (Anmelderin: Giesecke und Devrient GmbH) wird beschrieben, wie sich die Modulation von flachen Sicherheitselementen auf das Beugungsbild auswirkt. Die dort offenbarten Gitterstrukturen, die auf Polarisationseffekten beruhen, können allerdings nicht auf totalreflektierende Retroreflektoren angewendet werden, weil totalreflektierende Würfeleckenretroreflektoren nicht polarisationserhaltend sind.

Aus der DE 10 2005 061 749 A1 (Anmelderin: Giesecke & Devnent GmbH) sind Sicherheitselemente mit einer achromatisch reflektierenden Mikrostruktur in Form eines Mosaiks bekannt, wobei die Mosaikelemente auch Retroreflektoren sein können und eine laterale Abmessung aufweisen, die geringer ist als das Auflösungsvermögen des Auges und mit weiteren Sicherheitselementen versehen sein kann. In der EP 3 598 186 A1 (Anmelder: Hans Erich Gubela) sind Retroreflektoren gezeigt, bei denen in einer ausgewählten Anzahl an Tripeln erster Art Tripeln zweiter Art vorgesehen sind. Die WO 2020/074746 A1 (Anmelderin: Bundesdruckerei GmbH) offenbart ein Sicherheitselement mit einem in Reflexion beugenden Beugungselement, das eine Beugungsstruktur umfasst, für welche eine Beugungsgeometrie existiert, bei der eine Soll-Belichtungsrichtung des für die Beugung vorgesehenen Lichts mit einer Soll-Erfassungsrichtung, unter der das reflektierend gebeugte Licht erfassbar ist, am Auftreffort des Beugungselements einen spitzen Winkel einschließt.

Aus dem Bereich der Retroreflektoren für den Straßenverkehr können wichtige Definitionen übernommen werden:
Der Beobachtungswinkel $\alpha$ ist der Winkel zwischen den Geraden, die die Mittelpunkte einer anleuchtenden Lichtquelle und eines Empfängers mit dem Mittelpunkt einer Probe verbinden.

Als Anleuchtwinkel $\beta$ ist der Winkel zwischen der Verbindungsgeraden der Lichtquelle mit dem Mittelpunkt der beleuchteten Fläche und der Mittelsenkrechten der beleuchteten Fläche zu verstehen.

Der Verdrehwinkel ε ist der Winkel um den die Probe um ihre Mittelsenkrechte von einer beliebig festgelegten Lage aus in Anleuchtungsrichtung gesehen im Uhrzeigersinn (+ ε) oder entgegengesetzt (- ε) gedreht wird.

Die Definitionen der Begriffe Anleuchtwinkel, Beobachtungswinkel und Verdrehwinkel sind der DIN 67520 Teil 1 09.82 entnommen. Insoweit wird diese Norm in die vorliegende Anmeldung einbezogen.

Der vorliegenden Erfindung liegt die Aufgabe zugrunde, Retroreflektoren, insbesondere Mikrostrukturen, vor unerlaubter Nachahmung und Abformung zu schützen und mit einem unter einem Anleuchtwinkel > 30° sichtbaren Sicherheitsmerkmal zu versehen, und gleichzeitig möglichst wenig Reflektionsleistung in den retroreflektierenden Strukturen bei Anleuchtwinkel < 10° zu verlieren.

Diese Aufgabe wird durch ein retroreflektierendes Element nach Anspruch 1 gelöst. Anspruch 7 beschreibt eine Vorrichtung zur Detektion eines in dem Sicherheitselement des retroreflektierenden Elements codierten Signals. Ein Formwerkzeug zur Herstellung eines erfindungsgemäßen retroreflektierenden Elements ist in Anspruch 8 beschrieben

Das erfindungsgemäße retroreflektierende Element kann beispielsweise ein Retroreflektor oder eine retroreflektierende Folie sein. Es umfasst eine regelmäßige Anordnung mehrerer reflektierender Tripel mit jeweils drei Seitenflächen die zueinander näherungsweise senkrecht stehen. Das heißt, sie bilden zueinander einen Winkel zwischen 88° und 92° bevorzugt zwischen 89° 50' und 90° 10'. Mindestens ein ausgewählter Tripel in der Anordnung des erfindungsgemäßen retroreflektierenden Elements weist auf mindestens einer ersten Seitenfläche ein Sicherheitselement auf. Selbstverständlich kann das Sicherheitselement auch auf weiteren Seitenflächen des ausgewählten Tripels oder auf weiteren ersten Seitenflächen anderer Tripel angebracht sein. Das Sicherheitselement kann auch in einem regelmäßigen Muster angebracht sein. Ausgewählte Tripel mit dem Sicherheitselement können selbst wiederum einen Schriftzug bilden.

Ein Sicherheitselement ist ein Element, das zur Echtheitsprüfung dient. Die Echtheitsprüfung kann mit maschinellen Mitteln oder durch einen visuellen oder haptischen Eindruck erfolgen. Das Sicherheitselement dient dazu, unerlaubte Abformungen erkennbar zu machen. Das erfindungsgemäße Sicherheitselement weist diffraktive Strukturen wie ein einfaches Beugungsgitter oder ein Hologramm auf. Diffraktive Strukturen sind Strukturen, die auf dem Prinzip der Beugung beruhen.

Eine Modulationstiefe des erfindungsgemäßen Sicherheitselements ist so gewählt, dass das Sicherheitselement bei Beleuchtung des Retroreflektors unter einem Anleuchtwinkel < 10° nicht wahrnehmbar ist. Unter Modulationstiefe ist dabei die Amplitude der Gittermodulation zu verstehen. Die Modulationstiefe berechnet sich aus dem maximalen Höhenunterschied zwischen Peak und Tal innerhalb einer Gitterlinie des optischen Gitters, bzw. dem maximalen Höhenunterschischied zwischen Peak und Tal eines Hologramms. Je geringer die Modulationstiefe ist, desto geringer ist der Gangunterschied bzw. der Phasenunterschied, der durch den Weg des Lichts in der Tiefe also entlang eines Normalenvektors der ersten Seitenfläche hervorgerufen wird, und desto weniger intensiv ist das Beugungsbild des Sicherheitselements unter kleinen Anleuchtwinkeln. Unter großen Anleuchtwinkeln überwiegt der Effekt des Gitterabstands senkrecht zum Normalenvektor der ersten Seitenfläche und die Gitterstruktur wird sichtbar. Die Modulationstiefe der optischen Strukturen wird erfindungsgemäß möglichst gering gewählt. Bei einem Linienabstand der Gitterlinien von 1,5 μm hat sich eine Modulationstiefe von ca. 20 - 30 nm als geeignet herausgestellt. Durch eine solche Struktur ist das Sicherheitsmerkmal erkennbar, wenn man unter großen Anleuchtwinkel beleuchtet. In einem Normalbetrieb, z.B. in Sensoren, Lichtschranken oder Displays ist das Sicherheitsmerkmal unsichtbar.

Damit das Sicherheitsmerkmal im Normalbetrieb unsichtbar bleibt, ist es besonders vorteilhaft, wenn eine Beugungseffizienz der diffraktiven Strukturen geringer als 7% ist. Als Beugungseffizienz ist der Quotient der Energie zu verstehen, die in ein Beugungsmaximum erster Ordnung im Verhältnis zum Beugungsmaximum nullter Ordnung fließt.

Damit das Sicherheitsmerkmal durch seine Farbreflektionen bei großen Anleuchtwinkeln mit dem Auge erkennbar ist, sind Linienabstände der diffraktiven Strukturen in der Größenordnung von maximal 3 mal der gewünschten Wellenlänge des sichtbaren Lichts vorteilhaft, gemäß Anspruch 1 Linienabstände zwischen 500 nm und 2,0 μm. Besonders vorteilhaft sind Linienabstände zwischen 1,4 μm und 1,6 μm. Falls mehrere Tripel Sicherheitselemente aufweisen, ist es vorteilhaft, die Linienabstände der Sicherheitselemente benachbarter Tripel leicht zu variieren, damit trotz einer unterschiedlichen Anleuchtung bezogen auf den einzelnen Tripel ein optisch gleichmäßiger Gesamteindruck entsteht. Mit anderen Worten, der Linienabstand eines zweiten Sicherheitselements ist um einen Faktor zwischen 1,01 und 2 mal größer als der Linienabstand des ersten Sicherheitselements. Bevorzugt ist das zweite Sicherheitselement weiter von einer Lichtquelle bzw. einem Sender in bevorzugter Anleuchtrichtung entfernt als das erste Sicherheitselement. Der genaue Faktor der unterschiedlichen Linienabstände hängt vom Winkelunterschied zur Lichtquelle ab und muss individuell berechnet werden. Für eine maschinelle Erkennung können auch andere Gitterabstände gewählt werden, die dann beispielsweise Wellenlängen außerhalb des sichtbaren Spektrums geeignet beugen. Die Modulationstiefe sollte gemäß Anspruch 1 zwischen 0,1 % und 10 % des Linienabstands, bevorzugt zwischen 1 % und 2 % des Linienabstands betragen.

Bei kleinen Strukturen, also bei Strukturen mit Schlüsselweiten der Tripel zwischen 50 μm und 500 μm gemäß Anspruch 1,

die schwierig herzustellen sind, ist eine Markierung mit einem Sicherheitselement besonders interessant. Als Schlüsselweite ist der Abstand zwischen zwei parallelen Kanten des Sechseckes in der Projektion auf die Lichteintrittsfläche definiert. Ein Anwendungsbereich von solchen Strukturen sind beispielsweise Displays, bei denen ein Betrachter bei der normalen Nutzung das Sicherheitsmerkmal nicht erkennen soll oder flexible Retroreflektorfolien, bei denen kleine Schlüsselweiten zu einer besseren Flexibilität der Folie führen.

Je nach gewünschtem visuellem Effekt kann der Anteil der Fläche, die das Sicherheitselement auf der ersten Seitenfläche des mit dem Sicherheitselement versehenen Tripels bedeckt, frei gewählt werden. Wenn auch unter großen Anstrahlwinkeln möglichst wenig Licht in die Beugung gehen soll, kann die bedeckte Fläche zwischen 5 % und 50 % betragen. Wenn das Sicherheitselement möglichst schnell gefunden werden soll ist es sinnvoll zwischen 50 und 98 % der ersten Seitenfläche mit dem Sicherheitselement zu bedecken.

Gemäß einer vorteilhaften Ausführungsform der Erfindung weist der ausgewählte Tripel (3) auf jeder der drei Seitenflächen (5, 7, 9, 35) ein Sicherheitselement (11) auf. Hierbei unterscheidet sich die Modulationstiefe des Sicherheitselements (11) der ersten Seitenfläche (5) von der Modulationstiefe des Sicherheitselements der zweiten Seitenfläche (7). Beide Modulationstiefen unterscheiden sich wiederum von der Modulationstiefe des Sicherheitselements der dritten Seitenfläche (9). Dadurch kann aus unterschiedlichen Blickrichtungen ein unterschiedlicher Helligkeitseindruck erzeugt werden, wodurch eine Orientierung des erfindungsgemäßen retroreflektierenden Elements erleichtert wird.

Der erfindungsgemäße Retroreflektor kann einfach ausgerichtet werden. Insbesondere bei runden Retroreflektoren besteht bisher das Problem, dass die Lichtleistung von der Orientierung abhängig ist und entweder eine sichtbare Markierung auf einer Lichteintrittsfläche zur Kennzeichnung einer Vorzugsrichtung angebracht werden muss oder die Strukturen wie in dem Gebrauchsmuster DE 20 2019 001 143 U1 (Inhaberin: Imos Gubela GmbH Anmeldetag 11.3.2019) vorgeschlagen in verschiedene Bereiche angeordnet werden müssen, was durch das Zerschneiden einzelner Tripel ebenfalls zu Verlusten führt. Mit einem erfindungsgemäßen Retroreflektor ist eine einfache Ausrichtung des Reflektors möglich.

Die Ausrichtung erfolgt in folgenden Schritten:

Zunächst wird ein erfindungsgemäßes retroreflektierendes Element bereitgestellt. Das retroreflektierende Element wird unter einem vorgegebenen Anleuchtwinkel angestrahlt, beispielsweise unter einem Anleuchtwinkel zwischen 30° und 45° und unter einem vorgegebenen Beobachtungswinkel analysiert. Die Positionen eines Senders und eines Empfängers sind also vorher definiert. Der Empfänger kann sich beispielsweise in einem Gehäuse mit dem Sender, benachbart zu diesem angeordnet, befinden. Dies entspricht einem kleinen Beobachtungswinkel von ca. 0° bis 2°. Der Empfänger kann auch in einer Achse zur Mittelsenkrechten des retroreflektierenden Elements angeordnet sein. In diesem Fall ist der Beobachtungswinkel gleich dem Anleuchtwinkel.

In einem weiteren Schritt wird das erfindungsgemäße retroreflektierende Element schrittweise rotiert. D.h., der Verdrehwinkel $\varepsilon$ wird beispielsweise in 5°-Schritten geändert. Anschließend nimmt der Empfänger, beispielsweise eine CCD-Kamera, einen Farbwert auf. Der Farbwert ist der Absolutwert des Vektors zu einem Farbort. Eine Auswerteeinheit, beispielsweise ein Computer mit entsprechender Grafiksoftware gleicht den empfangenen Farbwert mit einem Sollwert ab. Anschließend kann noch eine Feinjustage mit geringerer Schrittweite, beispielsweise einer Schrittweite von 0,5° durchgeführt werden.

Für den Fall, dass in dem Sicherheitselement ein Signal codiert ist, wird eine Vorrichtung zum Auslesen des codierten Signals benötigt. Die Vorrichtung zur Detektion des im Sicherheitselement des retroreflektierenden Elements codierten Signals umfasst mindestens einen Sender, einen Empfänger, eine Aufnahme für das retroreflektierende Element und eine Auswerteeinheit. Der Sender sendet elektromagnetische Wellen mindestens einer vorgegebenen Wellenlänge aus. Die Wellenlänge ist bevorzugt im Bereich des sichtbaren Lichts. Eine einzelne Wellenlänge ist dann geeignet, wenn nur detektiert werden soll, ob bei einer vorgegebenen Position des Senders und des Empfängers überhaupt ein Signal detektiert wird. Wenn ein vorgegebenes Farbbild detektiert werden soll, ist Weißlicht, bspw. mit einer Farbtemperatur von 2600 K eine geeignete Lichtquelle des Senders. Die Aufnahme legt die Position des retroreflektierenden Elements fest. Das retroreflektierende Element ist also ortsfest. Es lässt sich also durch die Position des retroreflektierenden Elements in der Aufnahme eine Mittelsenkrechte der Eintrittsfläche bestimmen. Die Vorrichtung zeichnet sich dadurch aus, dass der Sender in einem Winkel größer als 30° und kleiner 90° zur Mittelsenkrechten angeordnet ist. Bevorzugt beträgt der Winkel zwischen 30° und 60°. Besonders bevorzugte Winkel sind die Steigungswinkel der Kanten also der Diagonalenwinkel in einem Würfel von 54,74°, der Komplementärwinkel dazu also 35,26°, weil dann jeweils ein Lichtweg existiert, bei dem ein Lichtstrahl senkrecht auf das Gitter auftrifft, sowie aus Symmetriegründen und Platzgründen ein Winkel von 45°.

Der Empfänger kann vorteilhaft an der Position eines an der Mittelsenkrechten gespiegelten Spiegelbilds des Senders, direkt an der Mittelsenkrechten oder in einem Gehäuse mit dem Sender angebracht sein.

Die Auswerteeinheit ist gemäß einer vorteilhaften Ausführungsform dazu konfiguriert, einen vorgegebenen Lichtwert mit einem am Empfänger gemessenen Lichtwert zu vergleichen, Abweichungen zu protokollieren und für einen menschlichen Bediener sichtbar zu machen. Bei zu großen Abweichungen erzeugt die Auswerteeinheit vorteilhafterweise eine Warnung oder einen Alarm.

Die Vorrichtung zur Detektion des codierten Signals kann zusätzlich zu einer regulären Lichtschranke in einer Sensoranordnung vorgesehen sein, die üblicherweise unter kleinen Anleuchtwinkeln (<5°) arbeitet.

Die erfindungsgemäße Vorrichtung mit dem erfindungsgemäßen retroreflektierenden Element kann auch dazu benutzt werden, Fehlstrahlen durch Fremdlichtquellen beispielsweise in Sensoren zu detektieren, da zusätzlich eine Farbkomponente detektiert werden kann. Wenn die Farbkomponente durch einen Empfänger und eine Auswerteeinheit nicht erfasst wird, aber vom Retroreflektor ein Signal empfangen wird, kann die Auswerteeinheit eine Fehlermeldung ausgeben.

Dier Herstellung des erfindungsgemäßen retroreflektierenden Elements erfolgt vorzugsweise durch Abformung eines Masters. Der Master als Formwerkzeug ist ein negativ des erfindungsgemäßen retroreflektieren Elements. Das Formwerkzeug hat also auch eine regelmäßige Anordnung von Tripeln mit jeweils drei Seitenflächen die zueinander einen Winkel zwischen 88° und 92° bevorzugt zwischen 89° 50' und 90° 10' bilden und besonders bevorzugt senkrecht aufeinander stehen. Tiefpunkte im Formwerkzeug werden Hochpunkte im retroreflektierenden Element. Das gleiche gilt für das Sicherheitselement und dessen diffraktiven Strukturen. Aufgrund von Ungenauigkeiten bei Abformung und Schrumpfungsprozesse des verwendeten Kunststoffs sollte die Modulationstiefe ca. 1,01 mal die gewünschte Modulationstiefe im retroreflektierenden Element betragen.

Für große Stückzahlen hat sich das Spritzgussverfahren bewährt. Für Prototypen kann auch auf andere Abformverfahren wie Heißprägen zurückgegriffen werden, wenn eine höhere Abformgenauigkeit erforderlich ist. Für die Herstellung von retroreflektierenden Folien kann auf Imprintverfahren, wie Rolle-zu-Rolle-Imprintverfahren mit UV-härtenden Polymeren zurückgegriffen werden. Bei all diesen Abformverfahren muss das Sicherheitselement vorher auf den Master aufgebracht werden. Dies kann mittels der üblichen Methoden der Lithographie wie der Fotolithographie mit Masken und anschließender Ätzung geschehen. Durch die Ätzdauer kann die Modulationstiefe beeinflusst werden. Billiger sind jedoch Methoden mittels Laserinterferenzablation. Dabei werden Strahlen eines UV-Ultrakurzpulslasers (zum Beispiel einer Wellenlänge von 197 nm) mit einem Gitterinterferometer so zur Interferenz gebracht, dass sich eine stehende Welle ausbildet. An den Stellen der konstruktiven Interferenz wird am Master Material abgetragen. Die Modulationstiefe der Struktur erhöht sich mit der Intensität der verwendeten Strahlung.

Wird das erfindungsgemäße retroreflektierende Element oder das Formwerkzeug erneut, beispielsweise mit galvanischen Verfahren abgeformt, bleibt das Sicherheitselement in schwächerer Ausprägung erhalten. Durch einen Vergleich der Intensitäten unter Anleuchtwinkeln > 30 ° kann eine unerlaubte Nachahmung, die unter Verwendung eines im Umlauf befindlichen retroreflektierenden Elements oder eines Formwerkzeugs entdeckt werden.

Die nachfolgenden Figuren sollen die Erfindung, ohne die Allgemeinheit der Offenbarung einzuschränken, näher erläutern. Es zeigen:

Figur 1 ein erfindungsgemäßes retroreflektierendes Element von einer Lichteintrittsseite aus betrachtet
Figur 2 das retroreflektierende Element aus Figur 1 aus einer weiteren Perspektive
Figur 3 symbolisch einen einzelnen Tripel mit erfindungsgemäßem Sicherheitselement
Figur 4 ein weiteres Beispiel eines diffraktiven Gitters
Figur 5 ein Beispiel eines erfindungsgemäßen Retroreflektors im Vergleich mit verschiedenen Beschriftungen gemäß Stand der Technik.

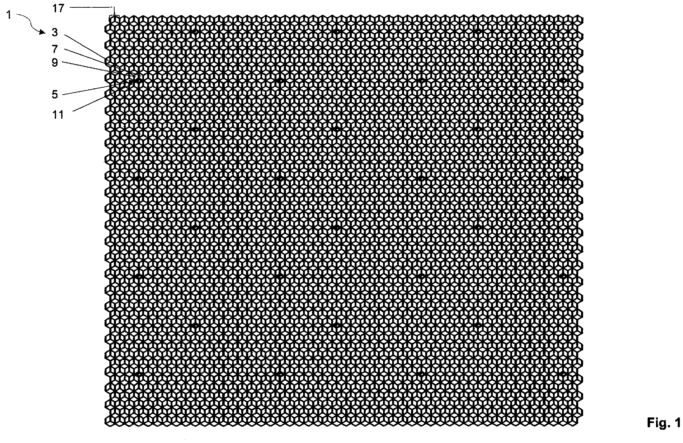

In **Fig. 1** ist ein erfindungsgemäßes retroreflektierendes Element 1 von einer Lichteintrittsseite aus betrachtet dargestellt. Das retroreflektierende Element 1 besteht aus einer regelmäßigen Anordnung von Tripeln 3. Jeder Tripel 3 hat in dieser Ansicht die Form eines Hexagons. Jeder Tripel 3 hat eine erste Seitenfläche 5, eine zweite Seitenfläche 7 und eine dritte Seitenfläche 9, die jeweils senkrecht aufeinander stehen. Auf der ersten Seitenfläche 5 von in regelmäßigem Abstand ausgewählten Tripeln 3 ist ein Sicherheitselement 11 angeordnet. Die Schlüsselweite 17 ist der Abstand zwischen parallelen Kanten des Hexagons.

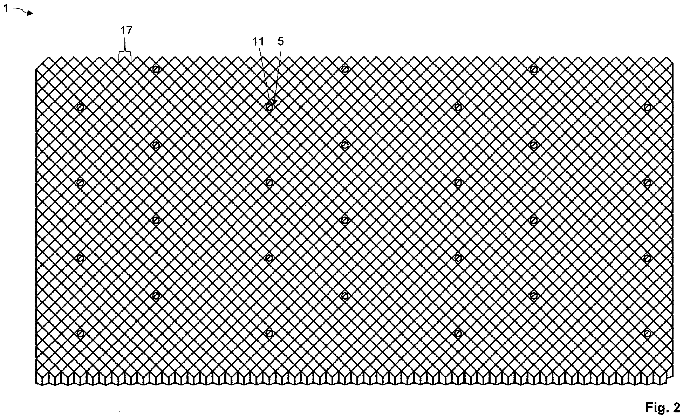

**Fig. 2** zeigt das retroreflektierende Element 1 aus der Perspektive der Draufsicht auf die ersten Seitenflächen 5 mit der regelmäßigen Anordnung von Sicherheitselementen 11. In dieser Perspektive entspricht die Schlüsselweite 17 der Diagonalen einer einzelnen ersten Seitenfläche 5.

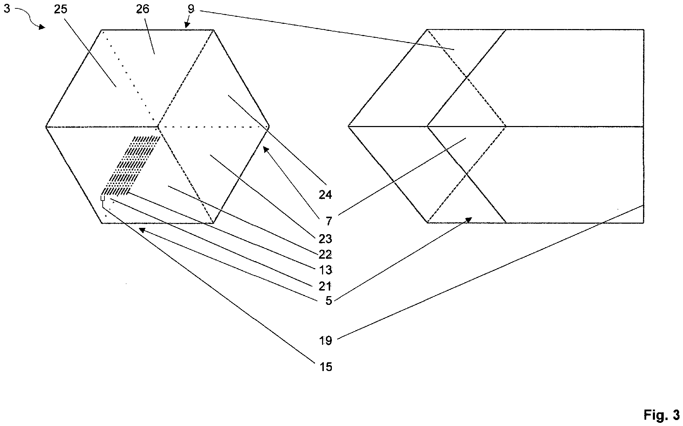

**Fig. 3** zeigt symbolisch einen einzelnen Tripel 3 eines erfindungsgemäßen Retroreflektors. Anhand dieser Figur soll der komplexe Lichtweg durch ein erfindungsgemäßes retroreflektierendes Element beispielhaft erläutert werden. Die Gitterlinien des Beugungsgitters als diffraktive Struktur 13 mit dem Linienabstand 15 (hier symbolisch dargestellt) verlaufen parallel zu einer Mitteldiagonalen der Fläche 5. Beispielsweise aus der EP 1 894 043 B1 (Inhaberin: Imos Gubela GmbH) ist bekannt, dass Licht sechs verschiedene Wege durch einen einzelnen Tripel 3 nehmen kann, da bei drei Seitenflächen 5, 7, 9 sechs verschiedene Permutationen der Reihenfolge möglich sind. In der sechseckigen Projektion auf eine Lichteintrittsfläche 19 entspricht jedem der möglichen Wege eine Teilfläche 21, 22, 23, 24, 25, 26. Für Licht, das durch das Sicherheitselement in die nullte Ordnung gebeugt wird, spielt die Reihenfolge, in der die Seitenflächen 5, 7, 9 durchlaufen werden, keine Rolle, da sich die nullte Ordnung wie ein Spiegel verhält. Bei höheren Beugungsordnungen folgt die Gesamtablenkung des reflektierten Strahls zur nullten Ordnung dem Beugungsgesetz:

$$d = g \cdot ( \sin \varphi - \sin \varphi_i ) = n * \lambda$$

mit d als Gangunterschied g als Gitterabstand, $\varphi$ als Beugungswinkel senkrecht zur Flächennormalen des Beugungsgitters, $\varphi_i$ als Einfallsrichtung senkrecht zur Flächennormalen des Beugungsgitters, n als Beugungsordnung, und $\lambda$ als der Wellenlänge der elektromagnetischen Strahlung.

Der Einfallswinkel $\varphi_i$ auf die diffraktive Struktur 13 hängt sowohl vom Anleuchtwinkel als auch von der Reihenfolge der angestrahlten Teilflächen ab. Für Licht, das zuerst auf die Seitenfläche 5 mit der diffraktiven Struktur 13 fällt ist der Einfallswinkel gleich dem Neigungswinkel der Seitenfläche 5 zur Lichteintrittsfläche 19 plus (vektoriell gerechnet) dem nach dem Brechungsgesetz an der Lichteintrittsfläche modifizierten Anleuchtwinkel. Der Beugungswinkel $\varphi$ wirkt für den weiteren Weg durch den Retroreflektor über die Seitenflächen 7 und 9 wie ein sehr großer Winkelfehler der Seitenfläche 5, sodass die in der Literatur üblichen Näherungen kleiner Winkelfehler nicht mehr greifen, sofern die Seitenflächen 7 und 9 überhaupt noch getroffen werden und der Strahl nicht als Irrstrahl verloren geht. Andererseits wirkt bei diesem Strahlengang die diffraktive Struktur 13 auch bei so großen Anleuchtwinkeln, dass normalerweise eine Totalreflektion der Seitenfläche 5 verloren gegangen wäre. Dann können Beugungsstrahlen höherer Ordnung trotzdem die Seitenflächen 7 und 9 treffen und von diesen reflektiert werden.

Auch ein Strahl, der die erste Seitenfläche 5 als zweite Reflexfläche nach einer Reflektion an der Teilfläche 25 der dritten Seitenfläche 9 oder der Teilfläche 23 der zweiten Seitenfläche 7 trifft, weist nach der Beugung einen großen Winkelfehler auf und erschwert so die Nachverfolgung.

Lediglich Licht, das auf die Teilflächen 24 und 26 zuerst auftrifft und von diesen reflektiert wird, trifft dann als letztes auf die Seitenfläche 5 mit der diffraktiven Struktur 13. Hier ist der Austrittswinkel des retroreflektierten Strahls ungefähr der Anleuchtwinkel, vektoriell addiert mit dem Beugungswinkel, der durch das diffraktive Gitter 13 verursacht wird.

Durch die Erörterung des Lichtwegs wird gezeigt, warum es erwünscht ist, höhere Beugungsordnungen bei kleinen Anleuchtwinkeln möglichst zu unterdrücken. Allerdings können die größeren Anleuchtwinkel bei vorgegebener Ausrichtung eines Senders und eines Empfängers und bei vorgegebenem Verdrehwinkel ($\varepsilon$) gezielt zu einer Codierung benutzt werden.

Da die Lichtwege wie gezeigt sehr komplex sind, muss für das oben beschriebene Justageverfahren und für die Vorrichtung zur Detektion des im Sicherheitselement des retroreflektierenden Elements codierten Signals der Sollwert einer Farbverteilung mittels einer Raytracingsoftware ermittelt werden oder in einer experimentell ermittelten Tabelle abgelesen werden.

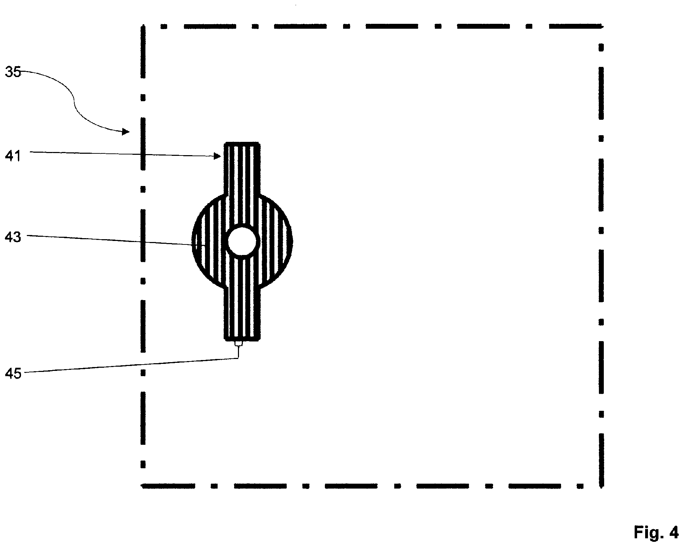

**Fig. 4** zeigt ein weiteres Beispiel eines Sicherheitselements 41 mit einem diffraktiven Gitter 43 auf einer ersten Seitenfläche 35 eines erfindungsgemäßen Retroreflektors in einer anderen Ausführungsform. Auch hier ist der Linienabstand 45 nur vergrößert symbolisch angedeutet und nicht als Maßangabe zu verstehen. Die einzelnen Gitterlinien des Beugungsgitter verlaufen parallel zu einer Seitenkante der Fläche. Im Vergleich zu dem Gitter gemäß Figur 3 sind die Gitterlinien also um 45° gedreht. Der Verlauf der Gitterlinien verleiht der Seitenfläche 35 eine Vorzugsrichtung, sodass Lichteinfall senkrecht dazu eher gebeugt wird als Lichteinfall parallel dazu.

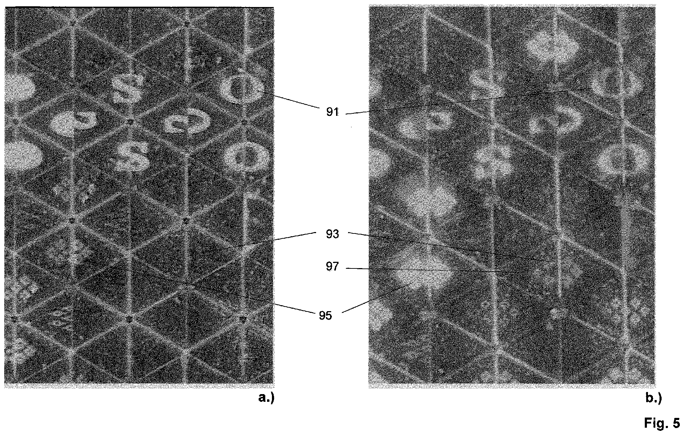

**Fig. 5** zeigt ein Beispiel eines erfindungsgemäßen Retroreflektors im Vergleich mit verschiedenen Beschriftungen gemäß Stand der Technik. Figur 5 a zeigt eine Mikroskopaufnahme des Retroreflektors bei Auflicht, d.h., unter einem Anleuchtwinkel von 0°. Figur 5 b zeigt den gleichen Ausschnitt des Retroreflektors unter einer Ausleuchtung unter einem Winkel von ca. 45° von schräg links oben. Konventionell ablatierte Buchstaben 91 absorbieren eingestrahltes Licht und vermindern so die Reflektionsleistung des Reflektors. Das erfindungsgemäße Sicherheitsmerkmal 93 ist bei Beleuchtung unter Auflicht unsichtbar und durch die hauptsächliche Beugung in die nullte Ordnung verhält sich das Sicherheitsmerkmal 93 optisch wie die es umgebende Reflektionsfläche 97. Sobald die Lichtquelle verschoben wird und unter Anleuchtwinkeln größer 30° beleuchtet wird, erscheint das Sicherheitsmerkmal in einem vom Anleuchtwinkel abhängigen Farbspektrum. Eine konventionelle diffraktive Struktur 95 ist auch unter Auflicht sichtbar, d.h. es wird Reflektionsleistung in ein Beugungsmaximum mindestens erster Ordnung gegeben und die Gitterstruktur fällt auch bei Verwendung für Sensorapplikationen sofort auf.

Bezugszeichenliste:

| 1 | retroreflektierendes Element |
|---|---|
| 3 | Tripel |
| 5, 35 | erste Seitenfläche |
| 7 | zweite Seitenfläche |

(fortgesetzt)

| 9 | dritte Seitenfläche |
|---|---|
| 11, 41 | Sicherheitselement |
| 13, 43 | diffraktive Struktur |
| 15, 45 | Linienabstand |
| 17 | Schlüsselweite |
| 19 | Lichteintrittsfläche |
| 21, 22, 23, 24, 25, 26 | Teilfläche |
| 91 | ablatierte Buchstaben |
| 93 | Sicherheitsmerkmal |
| 95 | sichtbare diffraktive Struktur |

**Patentansprüche**

1. Retroreflektierendes Element (1) beispielsweise ein Retroreflektor oder eine retroreflektierende Folie

   umfassend eine regelmäßige Anordnung mehrerer reflektierender Tripel (3) mit jeweils drei Seitenflächen (5, 7, 9, 35) die zueinander einen Winkel zwischen 88° und 92° bevorzugt zwischen 89° 50' und 90° 10' bilden und besonders bevorzugt senkrecht aufeinander stehen, wobei mindestens ein ausgewählter Tripel (3) in der Anordnung auf mindestens einer ersten Seitenfläche (5, 35) ein Sicherheitselement (11, 41) mit mindestens einer diffraktiven Struktur (13, 43) aufweist,
   **dadurch gekennzeichnet**, eine Schlüsselweite (17) des retroreflektierenden Elements (1) zwischen 50 $\mu$m und 500 $\mu$m beträgt und dass eine Modulationstiefe des Sicherheitselements (11, 41) so gewählt ist, dass das Sicherheitselement bei Beleuchtung des retroreflektierenden Elements (1) unter einem Anleuchtwinkel < 10° nicht wahrnehmbar ist, wobei die mindestens eine diffraktive Struktur (13, 43) des Sicherheitselements (11, 41) einen Linienabstand (15,45) zwischen 500 nm und 2,0 $\mu$m aufweisen und die Modulationstiefe zwischen 0,1 % und 10 % des Linienabstands (15, 45) beträgt .

2. Retroreflektierendes Element (1) gemäß Anspruch 1, **dadurch gekennzeichnet, dass** eine Beugungseffizienz der mindestens einen diffraktiven Struktur (13, 43) höchstens 7 % beträgt.

3. Retroreflektierendes Element (1) gemäß einem der vorhergehenden Ansprüche, **dadurch gekennzeichnet, dass** die Schlüsselweite (17) des retroreflektierenden Elements (1) zwischen 100 $\mu$m und 300 $\mu$m beträgt.

4. Retroreflektierendes Element (1) gemäß einem der vorhergehenden Ansprüche, **dadurch gekennzeichnet, dass** mindestens ein zweiter ausgewählter Tripel ein zweites Sicherheitselement mit diffraktiven Strukturen aufweist, wobei ein Linienabstand des zweiten Sicherheitselements zwischen 1,01 und 2 mal dem Linienabstand des ersten Sicherheitselements beträgt.

5. Retroreflektierendes Element (1) gemäß einem der vorhergehenden Ansprüche, **dadurch gekennzeichnet, dass** in das Sicherheitselement ein Signal codiert ist.

6. Retroreflektierendes Element (1) gemäß einem der vorhergehenden Ansprüche, **dadurch gekennzeichnet, dass** der ausgewählte Tripel (3) auf jeder der drei Seitenflächen (5, 7, 9, 35) ein Sicherheitselement aufweist, wobei sich die Modulationstiefe des Sicherheitselements der ersten Seitenfläche von der Modulationstiefe des Sicherheitselements der zweiten Seitenfläche unterscheidet und sich diese beiden Modulationstiefen von der Modulationstiefe des Sicherheitselements der dritten Seitenfläche unterscheiden.

7. Verwendung eines retroreflektierenden Elements gemäß Anspruch 6 in einer Vorrichtung zur Detektion des in dem Sicherheitselement des codierten Signals,

   wobei die Vorrichtung mindestens einen Sender, einen Empfänger, eine Aufnahme für das retroreflektierende Element und eine Auswerteeinheit umfasst,

wobei der Sender elektromagnetische Wellen mindestens einer vorgegebenen Wellenlänge oder ein ganzes Spektrum, bevorzugt im sichtbaren Bereich aussendet,

wobei die Aufnahme eine Position und eine Mittelsenkrechte des retroreflektierenden Elements definiert, **dadurch gekennzeichnet, dass** der Sender in einem Winkel > 30° bevorzugt zwischen 30° und 60° in Bezug auf die Mittelsenkrechte angebracht ist.

8. Formwerkzeug zur Herstellung eines retroreflektierenden Elements gemäß einem der Ansprüche 1 bis 6 umfassend eine regelmäßige Anordnung mehrerer Tripel (3) mit jeweils drei Seitenflächen (5, 7, 9, 35) die zueinander einen Winkel zwischen 88° und 92° bevorzugt zwischen 89° 50' und 90° 10' bilden und besonders bevorzugt senkrecht aufeinander stehen, wobei mindestens ein ausgewählter Tripel (3) in der Anordnung auf mindestens einer ersten Seitenfläche (5, 35) ein Sicherheitselement (11, 41) mit diffraktiven Strukturen (13, 43) aufweist, deren Modulationstiefe < 200 nm beträgt.

## Claims

1. Retroreflective element (1), for example a retroreflector or a retroreflective film, comprising a regular arrangement of several reflective triples (3), each with three side surfaces (5, 7, 9, 35) which form an angle between 88° and 92°, preferably between 89° 50' and 90° 10', and particularly preferably are perpendicular to one another, wherein at least one selected triple (3) in the arrangement has a security element (11, 41) with diffractive structures (13, 43) on at least one first side surface (5, 35), **characterized in that** a width between flats (17) of the retroreflective element (1) is between 50 $\mu$m and 500 $\mu$m and a modulation depth of the security element (11, 41) is selected such that the security element is imperceptible when the retroreflective element (1) is illuminated at an illumination angle < 10°, the diffractive structures (13, 43) of the security element (11, 41) have a line spacing (15, 45) between 500 nm and 2.0 $\mu$m and the modulation depth is between 0.1% and 10% of the line spacing (15, 45).

2. Retroreflective element (1) according to claim 1, **characterized in that** a diffraction efficiency of the diffractive structures (13, 43) is at most 7%.

3. Retroreflective element (1) according to one of the preceding claims, **characterized in that** the width between flats (17) of the retroreflective element (1) is between 100 $\mu$m and 300 $\mu$m.

4. Retroreflective element (1) according to one of the preceding claims, **characterized in that** at least a second selected triple has a second security element with diffractive structures wherein a line spacing of the second security element is between 1.01 and 2 times the line spacing of the first security element.

5. Retroreflective element (1) according to one of the preceding claims, **characterized in that** a signal is encoded in the security element.

6. Retroreflective element (1) according to one of the preceding claims, **characterized in that** the selected triple (3) has security elements on each of the three side surfaces (5,7,9,35), wherein the modulation depth of the first security element of the first side surface differs from the modulation depth of the first security element of the second side surface, and the modulation depths those two side surfaces differ from the modulation depth of the first security element of the third side surface.

7. Use of a retrorefractive element (1) according to claim 6 in a device for detecting a signal encoded in the security the device comprising at least one emitter, one receiver, a receptacle for the retroreflective element and an evaluation unit, wherein the emitter emits electromagnetic waves of at least one predetermined wavelength or an entire spectrum, preferably in the visible range, wherein the receptacle defines a position and a perpendicular bisector of the retroreflective element, **characterized in that** the transmitter is mounted at an angle > 30°, preferably between 30° and 60° with respect to the perpendicular bisector.

8. Molding tool for producing a retroreflective element according to one of claims 1 to 6, comprising a regular arrangement of several triples (3), each with three side surfaces (5, 7, 9, 35) which form an angle between 88° and 92°, preferably between 89° 50' and 90° 10', and particularly preferably are perpendicular to one another, wherein at least one selected triple (3) in the arrangement has a security element (11, 41) with diffractive structures (13, 43) on at least one first side surface (5, 35), the modulation depth of which is < 200 nm.

**EP 3 958 025 B1**

**Revendications**

1. Élément rétroréfléchissant (1), p. ex. un rétroréflecteur ou un film rétroréfléchissant comprenant un agencement régulier de plusieurs trièdres (3) réfléchissants comportant chacun trois surfaces latérales (5, 7, 9, 35) qui forment mutuellement un angle compris entre 88° et 92°, de préférence entre 89° 50' et 90° 10' et qui se trouvent de façon particulièrement préférentielle superposés verticalement, sachant qu'au moins un trièdre (3) sélectionné dans l'agencement présente, sur au moins une première surface latérale (5, 35), un élément de sécurité (11, 41) comportant au moins une structure diffractive (13, 43), **caractérisé en ce qu'**un calibre (17) de l'élément rétroréfléchissant (1) est compris entre 50 microns et 500 microns, et qu'une profondeur de modulation de l'élément de sécurité (11, 41) est sélectionnée de sorte que l'élément de sécurité, lorsque l'élément rétroréfléchissant (1) est illuminé, n'est pas perceptible selon un angle d'illumination < 10°, sachant qu'au moins une structure diffractive de l'élément de sécurité présente un écart entre lignes compris entre 500 nm et 2,0 microns, et que la profondeur de modulation est comprise entre 0,1 % et 10 % de l'écart entre lignes.

2. Élément rétroréfléchissant (1) selon la revendication 1, **caractérisé en ce qu'**une efficacité de diffraction d'au moins une structure diffractive (13, 43) est d'au maximum 7 %.

3. Élément rétroréfléchissant (1) selon l'une des revendications précédentes, **caractérisé en ce que** le calibre (17) de l'élément rétroréfléchissant (1) est compris entre 100 microns et 300 microns.

4. Élément rétroréfléchissant (1) selon l'une des revendications précédentes, **caractérisé en ce qu'**au moins un deuxième trièdre sélectionné présente un deuxième élément de sécurité comportant des structures diffractives, sachant qu'un écart de ligne du deuxième élément de sécurité est compris entre 1,01 et 2 fois l'écart entre lignes du premier élément de sécurité.

5. Élément rétroréfléchissant (1) selon l'une des revendications précédentes, **caractérisé en ce qu'**un signal est codé dans l'élément de sécurité.

6. Élément rétroréfléchissant (1) selon l'une des revendications précédentes, **caractérisé en ce que** le trièdre (3) sélectionné présente un élément de sécurité sur chacune des surfaces latérales (5, 7, 9, 35), sachant que la profondeur de modulation de l'élément de sécurité de la première surface latérale diffère de la profondeur de modulation de l'élément de sécurité de la deuxième surface latérale et que ces deux profondeurs de modulation diffèrent de la profondeur de modulation de l'élément de sécurité de la troisième surface latérale.

7. Utilisation d'un élément rétroréfléchissant selon la revendication 6 dans un dispositif servant à détecter le signal codé dans l'élément de sécurité, sachant que le dispositif comprend au moins un émetteur, un récepteur, un logement pour l'élément rétroréfléchissant et une unité d'analyse, sachant que l'émetteur émet des ondes électromagnétiques au moins d'une longueur spécifiée ou couvrant un spectre complet de longueurs d'onde, de préférence dans la plage visible, sachant que le logement définit une position et une médiatrice de l'élément rétroréfléchissant, **caractérisée en ce que** l'émetteur est monté selon un angle > 30°, de préférence compris entre 30° et 60°, par rapport à la médiatrice.

8. Outil de moulage pour la fabrication d'un élément rétroréfléchissant selon l'une des revendications 1 à 6, comprenant un agencement régulier de plusieurs trièdres (3) comportant chacun trois surfaces latérales (5, 7, 9, 35) qui forment mutuellement un angle compris entre 88° et 92°, de préférence entre 89° 50' et 90° 10', et qui se trouvent de façon particulièrement préférentielle superposés verticalement, sachant qu'au moins un trièdre (3) sélectionné dans l'agencement présente, sur au moins une première surface latérale (5, 35), un élément de sécurité (11, 41) comportant des structures diffractives (13, 43), dont la profondeur de modulation est < 200 nm.

Fig. 1

Fig. 2

**Fig. 3**

Fig. 4

a.)

b.)

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3810804 A
- DE 4236779 A1
- DE 102018112043 A1
- DE 10312708 B4
- DE 102012105571 A1
- DE 102009012300 A1
- DE 102005061749 A1
- EP 3598186 A1
- WO 2020074746 A1
- DE 202019001143 U1
- EP 1894043 B1

**In der Beschreibung aufgeführte Nicht-Patentliteratur**

- **RAJIB AHMED** ; **ALI K YETISEN** ; **SEOK HYUN YUN** ; **HAIDER BUTT**. Color-selective holographic retroreflector array for sensing applications. *Light: Science & Applications*, 05 September 2016